# EUROPEAN PATENT APPLICATION

(11) **EP 1 107 134 A2**
(43) Date of publication of application: **13.06.2001**
(21) Application number: 00307703.9
(22) Date of filing: 07.09.2000
(51) Int. Cl.: G06F 17/30

(54) **Apparatus and method for accessing a service via a computer network**

(30) Priority: 09.09.1999 IL 13187599
(71) Applicant: Leftpane.Com.Ltd., Tel Aviv 67443 (IL)
(72) Inventor: Golan, Gilad, Ramat Hasharon 47204 (IL)
(74) Representative: Cross, Rupert Edward Blount

(57) **Abstract**

There is provided a method for providing access to at least one related service auxiliary to a primary service, the primary service and the related service being accessed via a network, in which a user requests, via a data retrieval program, a primary service for retrieving data therefrom, and in which the data retrieval program outputs, in response to the user request, a service identifier identifying the primary service and a request identifier identifying a request made from the primary service, the method comprising the steps of: intercepting the service identifier and the request identifier; applying a rule set to the service identifier and the request identifier and producing a result; and optionally sending a secondary request to a secondary service and receiving a result of the secondary request, the decision to send said secondary request being based, at least in part, on the result of the applying step. An access apparatus for providing access to at least one related service auxiliary to a primary service, the primary service and the related service being accessed via a network, in accordance with the invention is also provided.

## Description

### FIELD OF THE INVENTION

The present invention relates to systems for providing access to services via a network in general, and in particular to systems for providing access to a related service auxiliary to a primary service.

### BACKGROUND OF THE INVENTION

Systems for providing access to services via a network are well known in the art. Many popular systems for providing access to services via a network are based on the Internet. In particular, systems known as Web Browsers are very popular. Web Browsers, running on computers having network access to the Internet, typically provide users with access to the World Wide Web (WWW), a well known subset of the Internet. Typical examples of commercially available Web Browsers include: Netscape® Navigator, commercially available from Netscape Communications Corporation, and Internet Explorer, commercially available from Microsoft Corporation.

As is well known, information in the WWW is accessed via an identifier known as a URL, which is intended to provide a unique name for each WWW resource to be accessed. Typically, a WWW resource to be accessed via a URL and including information for display by a Web Browser is also known as a Web page; a Web page typically comprises a multimedia unit of information accessible and presentable to a user at one time by a Web Browser. Web pages, in turn, are typically grouped together in Web sites, a Web site typically comprising one or a plurality of Web pages presented by a particular Web sponsor. For example, www.xyz.com/one, www.xyz.com/two, and www.xyz.com/three may be three Web pages, each comprised in the www.xyz.com Web site. The example of www.xyz.com is presented as an arbitrary example only, and no reference is intended thereby to any particular Web site.

While a great deal of information is available over the WWW, the problem of how to find information in the WWW that is relevant to the needs of the user has proved to be difficult to solve. Solutions to different aspects of the problem have been proposed and are well known, the solutions include various searching systems.

A commercially available product known as Alexa provides one solution to the problem of finding relevant information. Alexa is available over the WWW at URL www.alexa.com and is owned by Amazon.com. Alexa has been described on the following WWW sites:
www.post-gazette.com/businessnews/19980706balexa2.asp ;
www.zdnet.com/anchordesk/story/story_2543.html ;
www.internetworld.com/print/1998/10/05/infrastructure/19981005-alexa.html ; and
www.pcworld.com/pcwtoday/article/0,1510,8570,00.html.

In Alexa information is stored per Web site. The information stored by Alexa typically comprises contact information, site statistics, and relevant links for each Web site. For example, if the example www.xyz.com Web site mentioned above contained information about US patent law, Alexa might store, inter alia, Web links for other sites also including information about US patent law.

Alexa presents a user interface to the stored information in the form of a band object, specifically a type of band object known as an Explorer bar. A band object may be understood in terms of the Microsoft Component Object Model (COM), a well known software component architecture supported by Microsoft Corporation. COM is described in the following WWW site:
msdn.microsoft.com/isapi/msdnlib.idc?theURL=/library/specs/sld13 8.htm.

Band objects are further discussed in:
msdn.microsoft.com/library/sdkdoc/shellcc/Shell/Bands.htm

A band object is a COM component that can add a window to the Microsoft Internet Explorer alongside the main browsing window, the added window being known as an Explorer bar. It is believed that the presence of band objects in Microsoft Internet Explorer, beginning with version 4, provides a particularly convenient environment in which to build an embodiment of the present invention; however, it is appreciated that Microsoft Internet Explorer is mentioned by way of example only, and embodiments of the present invention may also be built in other environments. In the present specification, references to band objects and/or Explorer bars in a Web browser may be taken to refer to Microsoft Internet Explorer, by way of example as previously described.

Well known examples of band objects are the "History", "Favorites", and "Search" windows, or Explorer bars, in Internet Explorer versions 4 and 5. Band objects are typically loaded by the Web browser when the Web browser is invoked, and are capable of acquiring control of the Web browser's interface, known as IWebBrowser2 in the case of Internet Explorer, and of using the interface to receive event notifications and/or to control the Web browser's behavior and appearance. In the case of Alexa, the added window typically includes a display of Alexa stored information about the web site being viewed in the primary window.

The operation of Alexa does not include filtering in order to determine what information to display or whether to request information from the Alexa server at all, the Alexa client, running on the user system and displaying in the added window, requests information from the Alexa server for the Web site associated with any URL being browsed by the user.

Collaborative filtering is well known in the art. The Firefly product, originally developed by Firefly Networks Inc. and later acquired by Microsoft Corporation, is a commercially available collaborative filtering product.

US Patent 5,749,081 describes some technologies of the Firefly product.

Commercial databases including comparative information, such as comparative shopping information, on various Web sites are available from a variety of vendors; one example of such a database can be found at the URL:
http://www.inktomi.com/products/portal/shopping/technology.html

The disclosures of all references mentioned above and throughout the present specification are hereby incorporated herein by reference.

### SUMMARY OF THE INVENTION

The present invention seeks to provide an improved system for providing access to services via a network. In a preferred embodiment of the present invention, filtering rules are applied to each URL chosen by a user and appropriate information relating to the URL is provided in a secondary browser window adjacent to the normally present primary browser window.

More specifically, in a preferred embodiment, the present invention preferably uses a band object, typically comprising an Explorer bar, to present, when appropriate, a secondary browser window preferably located adjacent to the primary Web browser window. Preferably, software is associated with the second browser window, the software displaying and hiding the secondary browser window as appropriate; typically, the secondary browser window begins in a hidden state. Preferably, the software associated with the secondary browser window intercepts navigation events in which a user requests a new URL. Filtering rules are then preferably applied by the software to determine whether further action should take place for the indicated URL.

If further action should take place for the indicated URL, the secondary browser window is preferably shown with an appropriate message indicating that a request is in progress, and a URL request is then preferably sent to a server, the URL request including appropriate identifying information from which may be derived, typically by application of appropriate rules by a filter, a service type indicating a type of service such as, for example, shopping comparison or cross referencing, that is to be performed. If the server needs the actual Web page associated with the URL in order to proceed, the server in turn preferably fetches the Web page associated with the URL, analyzes the content thereof, and produces an appropriate response based on the service type and the content. Alternatively, for example when product information such as an ISBN of a book is included in the URL itself, an appropriate response may be produced without the actual content of the Web page. The response is preferably returned to the software associated with the secondary browser window and is then preferably displayed in the secondary browser window by the software.

Preferably, the secondary browser window includes, if appropriate, links to other URLs provided in the server response described above, and a user of the browser may select such links in a manner similar to that in which links are selected in the primary window, selection of a link in the secondary window preferably causing the new Web page associated with the selected URL to be displayed in the primary window. Alternatively, other actions may take place upon selection of a link in the secondary window; for example: the client object may intercept the selection and cause the secondary browser window to navigate to the selected URL; the client object may intercept the selection and cause the primary browser window to navigate to the selected URL, while the secondary browser window navigates to another URL; or any other appropriate action may take place.

Preferably, if a user manually selects another URL or selects a URL by choosing a link in the primary window, the secondary window is hidden from view until such time as the secondary window may be shown again, as described above.

There is thus provided in accordance with a preferred embodiment of the present invention a method for providing access to at least one related service auxiliary to a primary service, the primary service and the related service being accessed via a network, in which a user requests, via a data retrieval program, a primary service for retrieving data therefrom and the data retrieval program outputs, in response to the user request, a service identifier identifying the primary service and a request identifier identifying a request made from the primary service, the method including intercepting the service identifier and the request identifier, applying a rule set to the service identifier and the request identifier and producing a result, and based, at least in part, on the result of the applying step, optionally sending a secondary request to a secondary service and receiving a result of the secondary request.

Further in accordance with a preferred embodiment of the present invention the method also includes displaying the result of the secondary request for the user.

Still further in accordance with a preferred embodiment of the present invention the secondary service is chosen from among a plurality of available secondary services based, at least in part, on the result of the applying step.

Additionally in accordance with a preferred embodiment of the present invention the method also includes providing a client system and a server system, and wherein the intercepting, applying, and sending and receiving steps are executed in the client system.

Moreover in accordance with a preferred embodiment of the present invention the network includes the Internet.

Further in accordance with a preferred embodiment of the present invention the network includes the World Wide Web (WWW) accessed via the Internet.

Still further in accordance with a preferred embodiment of the present invention data received from the primary service is displayed on a display device in a primary window, and the result of the secondary request is displayed on the display device in a secondary window.

Additionally in accordance with a preferred embodiment of the present invention the method also includes ceasing to display the secondary window upon a further user request to display, in the primary window, data unrelated to the result of the secondary request.

Moreover in accordance with a preferred embodiment of the present invention the user is associated with a user identifier, and the secondary request includes the user identifier.

Further in accordance with a preferred embodiment of the present invention the method also includes the server sending a rule set update to the client, the rule set update including at least one of the following: addition of a new secondary service, deletion of an existing secondary service, and at least one of modification of, addition of, and deletion of at least one rule relating to behavior of a service.

Still further in accordance with a preferred embodiment of the present invention the method also includes the client requesting a rule set update from the server, the rule set update including at least one of the following: addition of a new secondary service, deletion of an existing secondary service, and at least one of modification of, addition of, and deletion of at least one rule relating to behavior of a service.

Additionally in accordance with a preferred embodiment of the present invention the method also includes, at the server, maintaining historical data including data describing a plurality of secondary requests.

Moreover in accordance with a preferred embodiment of the present invention the data describing a plurality of secondary requests includes a user identifier associated with the user who originated each the secondary request.

There is also provided in accordance with another preferred embodiment of the present invention access apparatus for providing access to at least one related service auxiliary to a primary service, the primary service and the related service being accessed via a network, the apparatus including user input apparatus operative to allow a user to request a primary service for retrieving data therefrom, an interceptor operative to intercept a service identifier identifying the primary service and a request identifier identifying a request made from the primary service, a rule-based filter operative to applying a rule set to the service identifier and the request identifier and to produce a result, and a secondary requestor operative based, at least in part, on the result produced by the rule-based filter, to optionally send a secondary request to a secondary service and receive a result of the secondary request.

Further in accordance with a preferred embodiment of the present invention also includes a display operative to display the result of the secondary request for the user.

Still further in accordance with a preferred embodiment of the present invention the display is operative to display data in a plurality of windows, and the data received from the primary service is displayed on the display device in a primary window, and the result of the secondary request is displayed on the display device in a secondary window.

### BRIEF DESCRIPTION OF THE DRAWINGS

The present invention will be understood and appreciated more fully from the following detailed description, taken in conjunction with the drawings in which:
Fig. 1 is a simplified pictorial illustration of apparatus for providing access to a related service auxiliary to a primary service, the apparatus being constructed and operative in accordance with a preferred embodiment of the present invention;
Fig. 2 is a simplified block diagram illustration of a preferred implementation of the apparatus of Fig. 1;
Fig. 3 is a simplified block diagram illustration of a preferred implementation of a portion of the apparatus of Fig. 2,
Fig. 4 is a simplified flowchart illustration of a preferred method of operation of the apparatus of Fig. 3; and
Fig. 5 is a simplified flowchart illustration of a preferred method of operation of a portion of the method of Fig. 4.

### DETAILED DESCRIPTION OF A PREFERRED EMBODIMENT

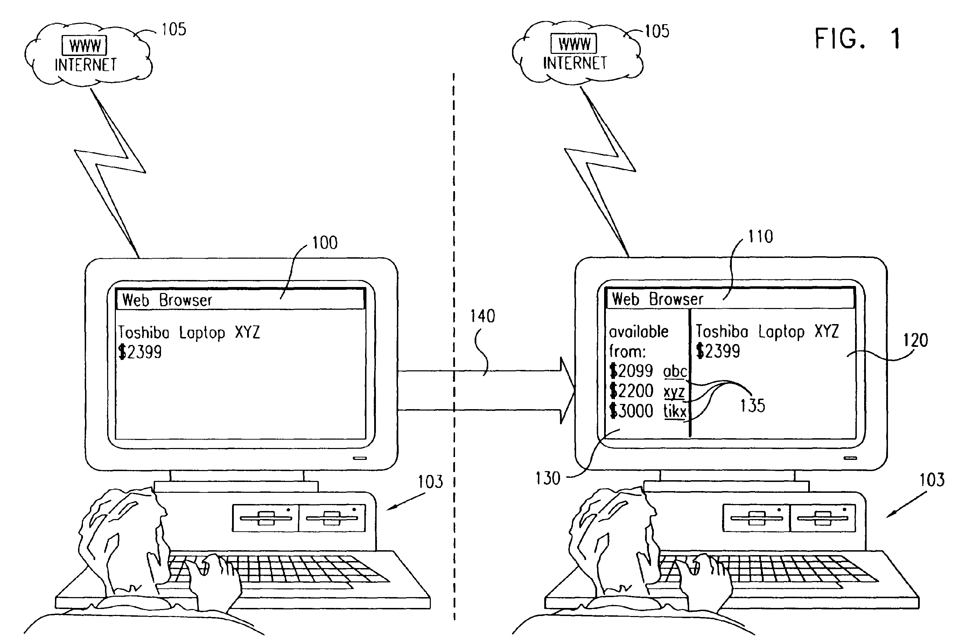

Reference is now made to Fig. 1 which is a simplified pictorial illustration of apparatus for providing access to a related service auxiliary to a primary service, the apparatus being constructed and operative in accordance with a preferred embodiment of the present invention. The apparatus of Fig. 1 comprises a particularly simple example of a user interface presented by the apparatus of the present invention, which example is presented for the sake of simplicity of description and is not meant to be limiting.

The apparatus of Fig. 1 comprises a first screen display 100, displayed on a conventional computer display of a computer 103, the computer 103 being operatively connected with the Internet 105. The first screen display 100, also termed herein a "primary display" or a "display of a primary service", preferably comprises a Web Browser display, such as might be produced by any appropriate commercially available Web Browser software, such as Microsoft® Internet Explorer or any other appropriate Web browser. As is well known in the art and as described above, a Web Browser display preferably comprises a display of a Web page associated with a particular URL. Specifically, and by way of example only, the screen display 100 comprises a display of a shopping site, in which an item of merchandise is offered for sale, associated with a shopping page URL (not shown).

The apparatus of Fig. 1 also comprises a second screen display 110, also displayed on the conventional computer display of the computer 103 Preferably, the second screen display 110 is displayed subsequent to display of the first screen display 100 and in response to a user of the first screen display 100 navigating to a particular URL. The second screen display 110 preferably comprises both: at least a portion 120 of the first screen display 100; and a secondary display 130, also termed herein a "display of a secondary service". The secondary display 130 preferably comprises related information from one or more URLs other than the URL associated with the first screen display 100.

The particular related information displayed in the secondary display 130 is preferably determined, as described in more detail below, by a process of filtering, in which filtering is used as a trigger in order to determine whether to request information for display from a server (not shown in Fig. 1), the information for display being preferably generated by the server in response to the request thereto. In the particular example of Fig. 1, in which the first display 100 comprises a description of merchandise offered for sale, the secondary display 130 may preferably comprise comparative information for the same or similar merchandise available for other sources.

Methods for finding such comparative information are well known in the art; a preferred method for use with a preferred embodiment of the present invention is as follows. A database may be maintained by creating, storing, and updating information on merchandise available from leading online merchants. For each item, the database preferably comprises entries for each online merchant offering the item; each entry preferably comprises price, URL, and other relevant information such as shipping charges. Preferably, each item is uniquely identified by an appropriate identifier suitable for a merchandise category in which the item is classified. For example, books may be identified by ISBN, home electronic items may be identified by manufacturer and part number, and so forth.

A database of the type previously mentioned may be maintained by specialized "web crawlers", well known in the art, which are typically operative to automatically visit WWW pages and to extract information therefrom in accordance with pre-defined rules, the rules typically being defined for each online merchant to be included, the rules preferably including information on how to identify a page offering an item for sale, and how to extract the identifier of the item. For example, and without limiting the generality of the foregoing, for books at Amazon.com the ISBN may be extracted from the URL, and the price may be extracted from the HTML associated with the URL by searching for the string "Our Price: $" and using the number following the "$" as the price.

It is appreciated that appropriate databases may be available commercially from a variety of vendors, such that a commercial database may be used in the present invention instead of implementing the procedure specified above. One example of such a database can be found at the URL:
http://www.inktomi.com/products/portal/shopping/technology.html

Preferably, the secondary display 130 may comprise one or more hyperlinks 135 to URLs of related services or sites; in the example of Fig. 1, a plurality of hyperlinks 135 to URLs of sites offering the same or similar merchandise at various prices are shown. Hyperlinks, as is well known in the art, are typically highlighted links to other URLs, displayed in a Web browser display; selecting one of the hyperlinks 135 in the secondary display 130 may preferably cause the portion 120 to display the Web page associated with the URL thus selected. Other possible actions upon selecting one of the hyperlinks 135 in the secondary display 130 are described below. Preferably, selecting a new URL directly for the portion 120, preferably using URL selection methods well known in Web Browsers, causes the secondary display 130 to cease to be displayed, with the appearance of the display then preferably reverting to an appearance similar to that of the primary display 100.

The operation of the apparatus of Fig. 1 is now briefly described. When a URL is specified by a user of the apparatus of Fig. 1 as is well known in the art, during or chronologically close to the display of the first screen display 100 a determination is made as to whether a display of a secondary service is to be made, the determination preferably including a determination based, at least in part, on the URL The process of making a determination is also termed herein "filtering".

Based on a result of the filtering, the second screen display 110, including the secondary display 130, preferably replaces the first screen display 100; alternatively, based on the result of the filtering, no change may be made to the first screen display 100, which may then continue to be displayed The process of filtering and, as appropriate, replacing the first screen display 110 with the second screen display 110 is indicated schematically in Fig. 1 by an arrow 140.

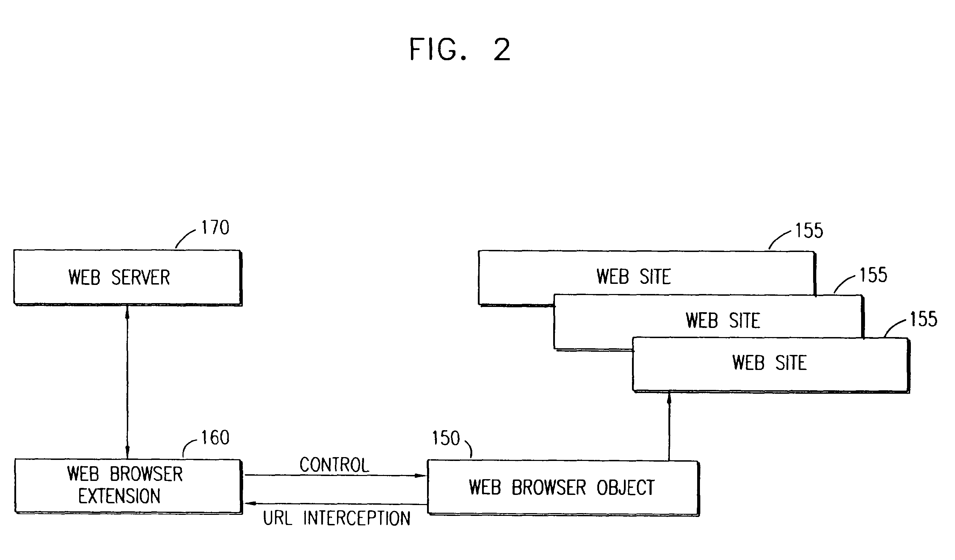

Reference is now made to Fig. 2, which is a simplified block diagram illustration of a preferred implementation of the apparatus of Fig. 1 The apparatus of Fig. 2 comprises a Web Browser Object 150, also termed herein "Web Browser 150", which may comprise any appropriate Web Browser, as described above. The Web Browser 150 is shown in operative communication with a plurality of Web sites 155. It is appreciated that each Web site may represent a Web page on a Web site, as described above. It is also appreciated that typically the Web Browser 150 is in operative communication with one or more Web sites 155, a plurality of Web sites 155 comprising three Web sites 155 being shown in Fig. 2 by way of example only.

The apparatus of Fig. 2 also comprises a browser extension 160, which is preferably implemented in software. The apparatus of Fig. 2 also comprises a Web server 170, also preferably implemented in software. The browser extension 160, preferably in communication with and in conjunction with the Web server 170, is preferably operative to interact with the Web Browser 150 in order to provide the functionality described above with reference to the second screen display 110 of Fig. 1. It is appreciated that the Web server 170 may be operatively associated with more then one browser extension 160. It is further appreciated that the Web server 170 is termed herein a "Web server" because the Web server 170 functions to receive HTTP requests including a URLs and to send HTML in response; however, the Web server 170, beyond performing the functions described herein, need not and typically does not fulfill other functions normally associated in the art with Web servers.

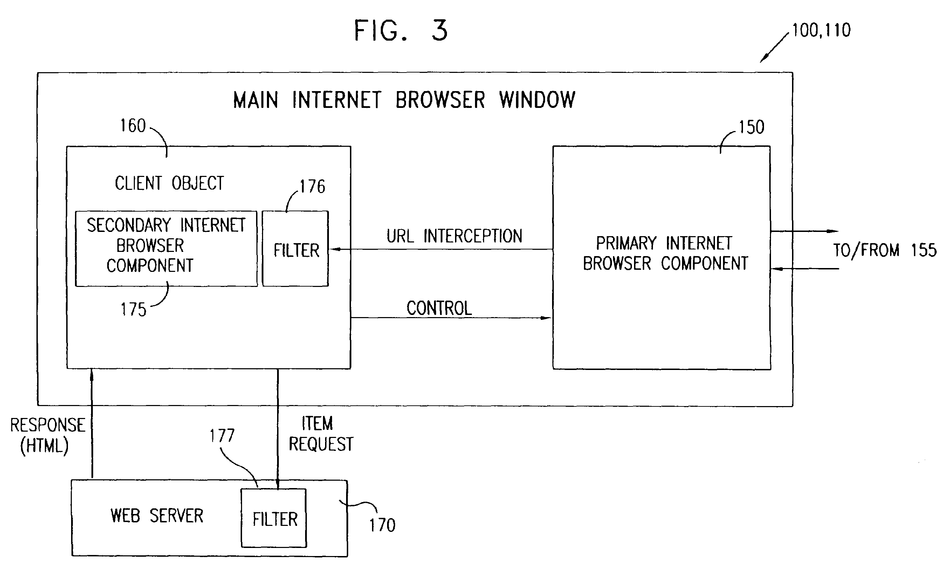

Reference is now made to Fig. 3, which is a simplified block diagram illustration of a preferred implementation of a portion of the apparatus of Fig. 2. The illustration of Fig. 3 is intended to further clarify the relationship between certain elements of Fig. 2, and their relationship to the apparatus of Fig. 1, as well as preferred information flow between the elements of Fig. 3. To further clarify the above-mentioned points, somewhat different and more detailed terminology has been used to describe the elements of Fig. 3 than was used to describe the elements of Fig. 2, above.

The apparatus of Fig. 3 preferably comprises a main Internet browser window, corresponding generally to the first screen display 100 and the second screen display 110 of Fig. 1. The apparatus of Fig. 3 also preferably comprises a primary Internet browser component 150, corresponding to the Web browser 150 of Fig. 2. The apparatus of Fig. 3 further preferably comprises a client object 160, corresponding to the Web browser extension 160 of Fig. 2. The client object 160 also preferably comprises a secondary Internet browser component 175, which is depicted distinct from the client object 160 to emphasize that the client object 160 also carries out tasks in addition to browser tasks.

The apparatus of Fig. 3 also preferably comprises a Web server 170, corresponding to the Web server 170 of Fig. 2.

The client object 160 preferably comprises a client filter 176, which is preferably operative to perform rule-based filtering, as described in more detail below.

The client object 160 preferably performs, as also described above, URL interception to obtain the URL requested in the primary Internet browser component 150. The client object 160, using the client filter 176, then performs filtering to determine whether or not to make a request for the requested URL. If a request is to be made, a URL request is sent to the Web server 170. The Web server 170 replies to the client object 160 with a response that typically comprises HTML to be displayed by the secondary Internet browser component 175; the HTML is preferably displayed.

Filtering performed by the client filter 176 preferably comprises rule-based filtering, in which zero or more rules preferably stored in a filter rules store (not shown) comprised in the client filter 176 are used to define the filtering which is intended to occur. Each rule preferably comprises:
a Web site URL prefix such as, for example, www amazon.com, the prefix immediately following the protocol selector, such as "http://";
a pattern descriptor, describing a pattern to be match in the URL following the URL prefix, the pattern descriptor typically comprising one of the following:
   null, or an empty descriptor, indicating that any URL beginning with the URL prefix is to be matched and that the portion of the URL following the prefix is to be used as a token;
   left delimiter, a string indicating that any URL including the left delimiter should be matched and that the portion of the URL following the left delimiter is to be used as a token;
   left delimiter with token length, a string indicating that any URL including the left delimiter and at least the number of characters indicated by the token length following the left delimiter, is to be matched and that the portion of the URL following the left delimiter and including the number of characters indicated by the token length is to be used as a token;
   left delimiter and right delimiter, two strings indicating that any URL including both the left delimiter and the right delimiter is to be matched, and the portion of the URL between the left delimiter and the right delimiter is to be used as the token.

It is appreciated that the rules themselves may be maintained in any appropriate manner, including via an update sent from the client object 160 to the Web server 170, or from the Web server 170 to the client object 160. Typically, such an update may include one or more of the following: addition of a new secondary service, deletion of an existing secondary service, and at least one of modification of, addition of, and deletion of at least one rule relating to behavior of a service.

Preferably, the client filter 176 in the client object 160 performs as described above to match a URL to a rule and to send the URL, if matched, to the Web server 170. The Web server 170 preferably also includes a server filter 177, which is preferably similar to the client filter 176 and which applies rules preferably identical to those applied by the client filter 176 in the client object 160, and also uses the token as an identifier of the item represented by the URL.

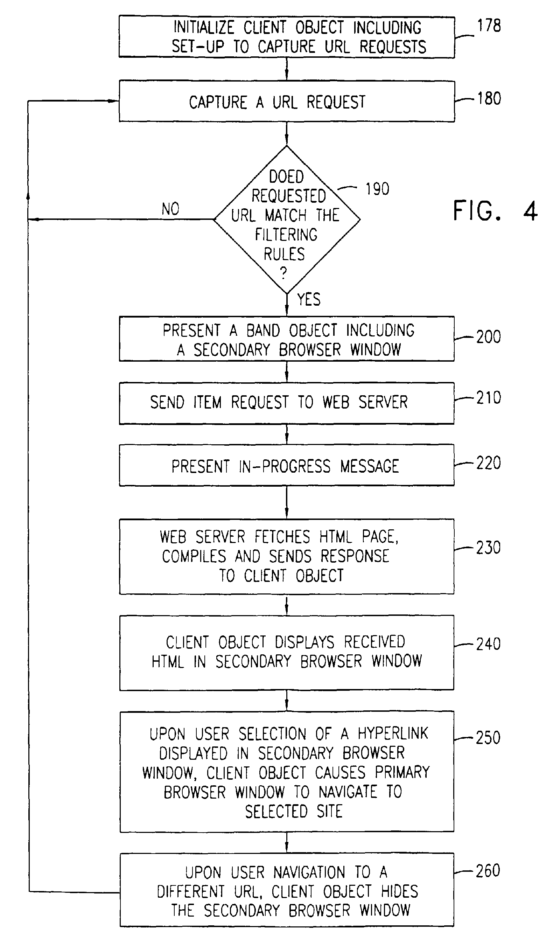

Reference is now made to Fig. 4, which is a simplified flowchart illustration of a preferred method of operation of the apparatus of Fig. 3. The method of Fig. 4 preferably includes the following steps:

A client object, preferably as described above, is initialized (step 178). The initialization preferably includes acquiring, in the example of Internet Explorer as described above, the IWebBrowser2 and using the IWebBrowser2 to intercept notification events sent by the primary Internet browser component. One type of event preferably intercepted is a user navigation to a URL, whether by manually entering a URL, by selecting a hyperlink displayed on a screen, or otherwise The user navigation event is also known as a DISPID_BEFORENAVIGATE2 event, and is typically signaled by the Web browser immediately after a user begins navigation to a URL, whether by clicking a hyperlink or by entering a URL on the browser's address line. An intercepted user navigation to a URL is also termed herein a "URL request".

When a URL request is actually captured (step 180), filtering rules are applied, as described above and a check is made as to whether the requested URL matches the filtering rules (step 190). If the requested URL does not match the filtering rules, no action is taken and the method of Fig. 4 preferably continues at step 180 until another URL request is received.

If the requested URL does match the filtering rules, a band object, typically comprising an Explorer bar, including a secondary browser window is presented (step 200), the appearance and behavior of the secondary browser window being preferably controlled by the client object.

An item request is sent to the Web server (step 210); the item request is preferably formatted as a URL and is preferably sent using HTTP. The item request preferably comprises:
a unique user ID, which may be used by the Web server to personalize results according to, for example, a user's preferences and subscriptions, and to gather user statistics on different users who may each use a system such as the system of Fig. 3, a plurality of such systems being in operative communication with one Web server; and
the URL requested in the user's URL request.

Preferably, to notify the user that a request is in progress, an appropriate in-progress message is presented in the secondary browser window (step 220).

The Web server fetches the HTML page pointed at by the URL, if the HTML page is needed, analyzes the HTML page in accordance with a service type, and compiles a response, typically formatted as an HTML page (step 230).

In step 230, filtering rules, preferably chosen from a plurality of available filtering rules based on user ID, are preferably applied to the URL in order to determine the type of processing to occur in step 230 The service type, typically produced by the filtering rules and typically indicating the type of service desired for the requested URL, such as shopping comparison, cross-referencing, or any other appropriate type of service, is preferably produced by the Web server based on the received request. The Web server preferably stores service types by user, so that each user may only receive a response for certain service types.

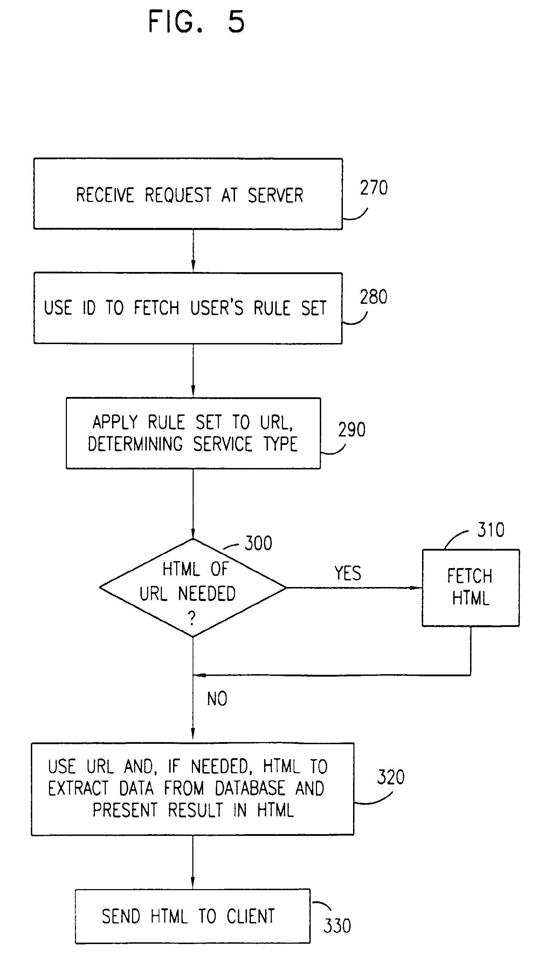

The response HTML page is sent back to the client object 160. A preferred method of operation of step 230 is described in more detail below with reference to Fig. 5.

The client object displays the response HTML page in the secondary browser window, replacing the in-progress message of step 220 (step 240).

If the user selects a hyperlink displayed in the secondary browser window, the client object intercepts the selection and may cause the primary browser window to navigate to the selected site (step 250). Alternatively, other actions may take place upon selection of a hyperlink in the secondary browser window; for example: the client object may intercept the selection and cause the secondary browser window to navigate to the selected URL; the client object may intercept the selection and cause the primary browser window to navigate to the selected URL, while the secondary browser window navigates to another URL; or any other appropriate action may take place. Preferably, the action which takes place is chosen based, at least in part, on special tags received from the server as part of the HTML produced by the server. For example, a tag may be used to mark a URL or, in the case where the primary browser window navigates to the selected URL and the secondary browser window navigates to another URL, one or more tags may be used to group two URLs, with special tags used as delimiters.

If, on the other hand, the user navigates to a different URL in the primary window, the client object preferably hides the secondary browser window (step 260), and the method of Fig. 4 preferably continues with step 180.

It is appreciated that the method of Fig. 4 is not shown as ending, generally, the method of Fig. 4 comes to an end when a user command or other event causes the primary browser window, and therefore the client object, to be shut down.

It is further appreciated that many variations on the method of Fig. 4 are possible. For instance, and without limiting the generality of the foregoing, while hiding and redisplaying the secondary browser window, as for example in steps 200 and 260, are believed to be preferred, these steps, along with step 220, are optional.

It is still further appreciated that the method of Fig. 4, while being appropriate in some details particularly for Microsoft Internet Explorer, may be modified by persons skilled in the art for use with another appropriate Web browser. It is further appreciated that persons skilled in the art could modify the method of Fig. 4, and the apparatus of Figs. 1 - 3, for user with other network services in addition to the World Wide Web, the WWW being provided by way of a useful example, the example not meant to be limiting.

Reference is now made to Fig. 5, which is a simplified flowchart illustration of a preferred method of operation of a portion of the method of Fig. 4. The method of Fig. 5 comprises a preferred implementation of step 230 of Fig. 4 The method of Fig. 5 preferably includes the following steps:

A request is received at the server (step 270); the request typically includes a URL and a user ID uniquely identifying a user of the system. The user ID is used to fetch a rule set associated with the user (step 280), the rule set, described further above, typically including rules defining one or more service types which are of interest to the user.

The rule set is applied to the URL, and the service type is thereby determined (step 290). If, according to the result of applying the rule set, HTML of the URL is needed in order to determine what result is sent to the client (step 300), the HTML is fetched (step 310). In any case, the method of Fig. 5 preferably proceeds with step 320.

The URL and, if necessary, the HTML, are used to extract data from an associated database, typically as described above, the resulting extracted data is presented in HTML form suitable for display by a Web browser (step 320). The resulting HTML is sent to the client for display (step 330).

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined only by the claims which follow:

## Claims

1. A method for providing access to at least one related service auxiliary to a primary service, the primary service and the related service being accessed via a network,
in which a user requests, via a data retrieval program, a primary service for retrieving data therefrom,
and in which the data retrieval program outputs, in response to the user request, a service identifier identifying the primary service and a request identifier identifying a request made from the primary service, the method comprising the steps of:
intercepting the service identifier and the request identifier;
applying a rule set to the service identifier and the request identifier and producing a result; and
optionally sending a secondary request to a secondary service and receiving a result of the secondary request, the decision to send said secondary request being based, at least in part, on the result of the applying step.

2. A method according to claim 1 and also comprising:
displaying the result of the secondary request for the user.

3. A method according to claim 2 and wherein data received from the primary service is displayed on a display device in a primary window, and
the result of the secondary request is displayed on the display device in a secondary window.

4. A method according to claim 3 and also comprising:
ceasing to display the secondary window upon a further user request to display, in the primary window, data unrelated to the result of the secondary request.

5. A method according to any preceding claim and wherein said secondary service is chosen from among a plurality of available secondary services based, at least in part, on the result of the applying step.

6. A method according to any preceding claim and also including:
providing a client system and a server system, and
wherein the intercepting, applying, and sending and receiving steps are executed in the client system.

7. A method according to claim 6 and also comprising:
the server sending a rule set update to the client, the rule set update comprising at least one of the following: addition of a new secondary service; deletion of an existing secondary service; and at least one of modification of, addition of, and deletion of at least one rule relating to behavior of a service.

8. A method according to claim 6 or claim 7 and also comprising:
the client requesting a rule set update from the server, the rule set update comprising at least one of the following: addition of a new secondary service; deletion of an existing secondary service; and at least one of modification of, addition of, and deletion of at least one rule relating to behavior of a service.

9. A method according to any of claims 6 to 8 and also comprising:
at the server, maintaining historical data comprising data describing a plurality of secondary requests.

10. A method according to claim 9 and wherein the data describing a plurality of secondary requests includes a user identifier associated with the user who originated each said secondary request.

11. A method according to any preceding claim and wherein the network comprises the Internet.

12. A method according to claim 1 and wherein the network comprises the World Wide Web (WWW) accessed via the Internet.

13. A method according to any preceding claim and wherein the user is associated with a user identifier, and the secondary request comprises the user identifier.

14. Access apparatus for providing access to at least one related service auxiliary to a primary service, the primary service and the related service being accessed via a network, the apparatus comprising:
user input apparatus operative to allow a user to request a primary service for retrieving data therefrom;
an interceptor operative to intercept both a service identifier identifying the primary service and a request identifier identifying a request made from the primary service;
a rule-based filter operative to applying a rule set to the service identifier and the request identifier and to produce a result; and
a secondary requestor operative to optionally send a secondary request to a secondary service and receive a result of the secondary request, the decision to send said secondary request being based, at least in part, on the result produced by said rule-based filter.

15. Access apparatus according to claim 14 and also comprising a display operative to display the result of the secondary request for the user.

16. Access apparatus according to claim 14 or claim 15 and wherein the display is operative to display data in a plurality of windows, and
the data received from the primary service is displayed on the display device in a primary window, and
the result of the secondary request is displayed on the display device in a secondary window.
